# EUROPEAN PATENT APPLICATION

(11) **EP 4 654 103 A1**
(43) Date of publication of application: **26.11.2025**
(21) Application number: 25177167.1
(22) Date of filing: 19.05.2025
(51) Int. Cl.: G06Q 10/0631, G06Q 10/10, G06N 3/045

(54) **WORKFLOW MANAGEMENT**

(30) Priority: 24.05.2024 US 202418673333
(71) Applicant: HONEYWELL INTERNATIONAL INC., Charlotte, NC 28202 (US)
(72) Inventor: SINGH, Ankit, Charlotte, 28202 (US)
(74) Representative: Haseltine Lake Kempner LLP

(57) **Abstract**

Techniques for managing workflow are disclosed. A tag creation signal is received upon interaction with an actionable component of a collaborative work platform having a workflow that includes a plurality of stages, each having a stage descriptor linked therewith. The tag creation signal indicates a request to define a tag for being linked with one of the stages. Acquisition of user-defined tag content is then initiated for being associated with the tag. The tag content is then parsed to derive a tag descriptor. Further, a correlation is determined between the tag descriptor and the stage descriptor linked with each of the plurality of correlated stages. A stage correlating with the tag descriptor is then identified and the tag content is associated with the identified stage. Further, upon initialization of the identified stage, an alert generation signal is generated to indicate the user-defined tag content associated with the identified stage.

## Description

### BACKGROUND

With the development of technology, collaborative work applications and/or platforms have evolved that allow multiple entities to work collaboratively. For example, multiple users may work collectively and collaboratively on the same project. In an example, collaborative work platforms may help users define, manage, and follow one or more workflows. The one or more workflows may be related to, for instance, development of products and services. The one or more workflows may also be related to development or creation of different types of machine-readable documents associated with such products and services. The workflows may include one or more intermediate stages that are required to be completed to conclude the workflows.

### BRIEF DESCRIPTION OF DRAWINGS

The detailed description is described with reference to the accompanying figures. It should be noted that the description and figures are merely examples of the present subject matter and are not meant to represent the subject matter itself.
Figures 1A to 1C illustrate a computing environment, according to an example implementation.
Figure 2 illustrates a block diagram of a collaborative work platform, according to one example implementation.
Figure 3 illustrates linking of stages with corresponding stage descriptors, according to one example implementation.
Figure 4 illustrates a user database, according to one example implementation.
Figure 5 illustrates a block diagram of a system, according to one example implementation of the present subject matter.
Figure 6 illustrates a computing environment comprising the system, according to another example implementation.
Figure 7 illustrates an actionable component associated with the collaborative work platform, according to one example implementation.
Figure 8 illustrates a method for managing workflow, according to an example implementation.
Figures 9A and 9B illustrate a method for managing the network transactions, according to another example implementation.
Figure 10 illustrates a non-transitory computer-readable medium for managing workflow in a collaborative work environment, in accordance with an example of the present subject matter.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Collaborative work applications and platforms enable entities to work collectively and collaboratively. The entities may be, for example, independent users or users associated with one or more organizations. In one example, an organization may develop various services in the form of products and platforms. For the development and maintenance of such services, the organization may utilize a collaborative work platform where one or more workflows are defined. Each of the one or more workflows may have multiple correlated sub-steps or stages. Multiple users associated with the services may work collaboratively to complete the stages for at least partially completing a workflow and, thereby, advancing the development and maintenance of such services towards their completion. In another example, organizations may also develop different types of machine-readable documents associated with such services. The documents may include, for example, information associated with one or more products and/or services. Multiple users may follow a workflow to work collaboratively and advance the development of such documents.

Generally, the process of development of such services and documents is a manual and time-consuming process that requires following one or more workflows, each having multiple correlated sub-steps or stages. For example, different users may have a stage of the workflow associated with each of them and have roles and responsibilities required to be performed to complete the stage and advance the workflow to the next correlated stage. Another user, associated with the next stage, may then perform actions required to complete that particular stage and further advance the workflow to the next correlated stage of the workflow. Accordingly, one or more workflows may be defined in the process of development of services and/or documents and multiple users may work collaboratively to conclude the workflow.

To facilitate such a collaborative work environment between users, multiple solutions have been developed. However, such solutions still fail to satisfactorily address a few outstanding issues. For example, users may have to initiate one or more search queries to identify the stages linked/assigned to them. In a scenario where the workflow includes a large number of correlated stages, querying a large number of correlated stages to identify a stage relevant to the user may consume a considerable amount of computing resources and time. Further, the computing resources would experience such workload each time a search query is being provided and executed. Thus, in a scenario where multiple users work collaboratively, and multiple users execute such search queries, the computing resources experience excessive workload.

Further, there is always a possibility that the user may be indicated or provided with multiple stages that are relevant to the search query provided by the user. The user may then have to manually and critically analyze the resulting stages to find the relevant stage. Such complications may further increase with increase in the number of search results and the number of stages. Also, such drawbacks may lead to delays in completion of the workflow, thereby introducing ineffectiveness in the workflow's completion.

Further, while associating another user with a stage, the user is generally required to enter details or comments in a predefined format or syntax. For instance, the first user may be required to provide exact details, according to a predefined syntax, of another user to whom a particular stage is to be associated. The details may be, for example, name, department name, and actions required to be performed to complete the stage. Thus, for associating users with the stages, the users are required to have knowledge of the syntax being followed for a particular workflow, thus lacking flexibility and user-friendliness. Further, in case of errors, such as typographical errors, inputs from the user may not be interpreted appropriately or correctly. As a result, no user, or a user other than the intended user, may get associated with that stage, causing errors and disturbances in the workflow, and further delaying completion of the workflow.

The present subject matter describes approaches for efficient and enhanced workflow management. According to the present subject matter, a collaborative work platform may include a workflow. The workflow may include multiple correlated stages that are required to be completed to advance the workflow towards completion. Each of the correlated stages may have associated therewith a stage indicator uniquely identifying each stage of the workflow. Each of the correlated stages may also have, associated therewith, a predefined set of actions. For example, each of the stages may have a set of actions required to be performed when the workflow reaches that stage.

Further, in one example, creation of a tag may be initiated upon receiving an input from a user. For example, the collaborative work platform may include an actionable component on which the user may interact to provide an input to initiate creation of the tag, where the tag is to be linked with a stage from amongst the plurality of correlated stages. For example, upon receiving the user input on the actionable component, such as a button, a tag creation signal may be received. In response to receiving the tag creation signal, acquisition of user-defined tag content may be initiated. For example, a first Graphical User Interface (GUI) may be rendered to receive the user-defined tag content to be associated with the tag. In one example, the user-defined tag content may be a textual content provided by the user in a general language.

The user-defined tag content may then be parsed to derive a tag descriptor corresponding to the user-defined tag content. For example, natural language processing may be implemented on the textual content provided by the user to derive the tag descriptor. In one example, the tag descriptor may include a destination identifier uniquely identifying a target destination, from amongst a plurality of target destinations, with which the user-defined tag content is to be linked. The user-defined tag content may be parsed to determine an identifier associated with a target destination, such as one of the plurality of stages. The tag descriptor may further include one or more actions to be performed in association with that stage of the workflow. For example, the user-defined textual content may be parsed to determine the one or more actions that the user wishes to be performed by another user when the workflow reaches that stage. Thus, the user-defined tag content may be parsed to identify the target destination, such as the stage of the workflow, and the one or more actions to be indicated for being performed by the other user when the workflow reaches that particular stage.

Further, a correlation between the tag descriptor and the stage descriptor linked with each of the plurality of correlated stages may be determined. For example, it may be determined whether the target destination included in the tag descriptor is correlated with a stage identifier associated with any of the plurality of stages. That is, it may be determined whether the destination identifier derived from the user-defined tag content is correlated with a stage identifier associated with one of the plurality of stages. Based on the correlation, the stage with which the user-defined tag content is to be associated may be determined. In one example, a correlation may also be determined between the one or more actions, derived from the user-defined tag content, and the set of actions associated with each of the stages. Based on the correlation, a stage may be identified that requires performance of actions that are semantically similar to the actions provided in the user-provided content. Thus, by determining correlation between the tag descriptor and the stage descriptor, a stage suitable for the tag descriptor may be identified. Once the suitable stage is identified, the user-defined tag content may be linked with that stage. In one example, the user-defined tag content may be linked with the identified stage. Further, initialization of the identified stage may be monitored. In response to initialization of the identified stage, an alert generation signal may be generated for indicating the user-defined tag content associated with the one or more identified stages. In one example, the alert generation signal may be instructions that may cause rendering of at least one of a visual indicator and an audio alert for indicating the user-defined tag content.

The present subject matter addresses the problems associated with conventional techniques. For example, by using the actionable component, the user is provided with the flexibility to assign a user to a required stage of a workflow. Thus, the user can manage different stages of a workflow in a user-friendly manner. Further, the user is not required to manually identify a stage from amongst a plurality of stages in a workflow. The stage may automatically be identified based on the user-defined tag content. Thus, the user may no longer have to perform any complex searching operation to identfy a desired stage and then initiate the association of the tag with the desired stage. Also, the user is not required to enter data, to be associated with a stage of the workflow, according to any predefined syntax. The user may provide data, for example, in a natural language and the data may be parsed to automatically identify the stage with which the data is to be associated. Thus, association of tags with stages may be faster and without execution of requirement of any manual complex searching operation. Further, as the user may enter data in natural language, users have no, or less, knowledge of the synax may also be able to flexibly associate data with stages and in a faster manner. Thus, speed, flexibility, and user-friendliness in association of tags with stages may be considerably improved.

Further, as initialization of the stages is monitored, the user allocated for a stage via the tag may be intimated to initiate one or more actions only when the workflow reaches that particular stage. For example, the user may be presented with at least one of a visual indication and the audio indicator to indicate the content associated with that particular stage. Thus, initiation of computational resource extensive search operations is no longer required to be performed for identifying stages pending with the user. That is, when the workflow reaches the stage, the user associated with that stage is automatically notified and the user may then initiate the required one or more actions. Thus, the present subject matter discloses techniques for efficient and enhanced workflow management.

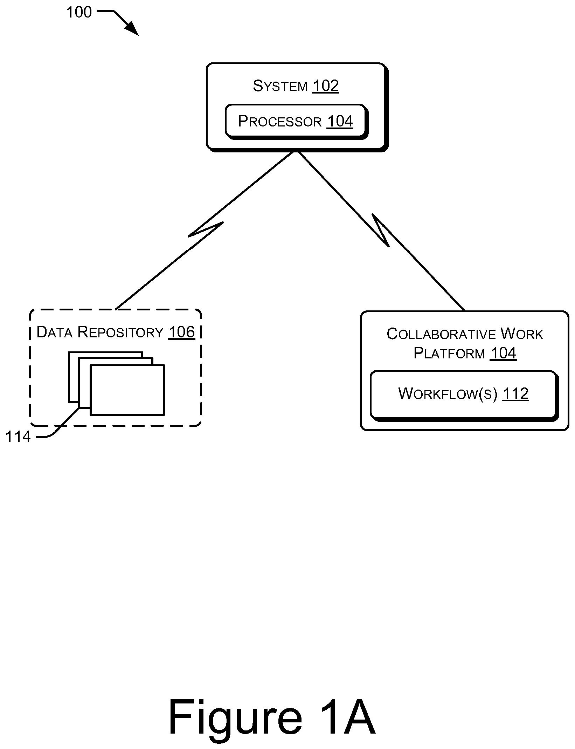

The above techniques are further described with reference to Figures 1A to 10. It would be noted that the description and the figures merely illustrate the principles of the present subject matter along with examples described herein and would not be construed as a limitation to the present subject matter. It is thus understood that various arrangements may be devised that, although not explicitly described or shown herein, embody the principles of the present subject matter. Moreover, all statements herein reciting principles, aspects, and implementations of the present subject matter, as well as specific examples thereof, are intended to encompass equivalents thereof.

Figures 1A to 1C illustrate a computing environment 100, according to an example implementation. Figures 1A to 1C may be discussed in conjunction with each other. In one example, the computing environment 100 may be any environment having a system 102, a collaborative work platform 104, and a data repository 106.

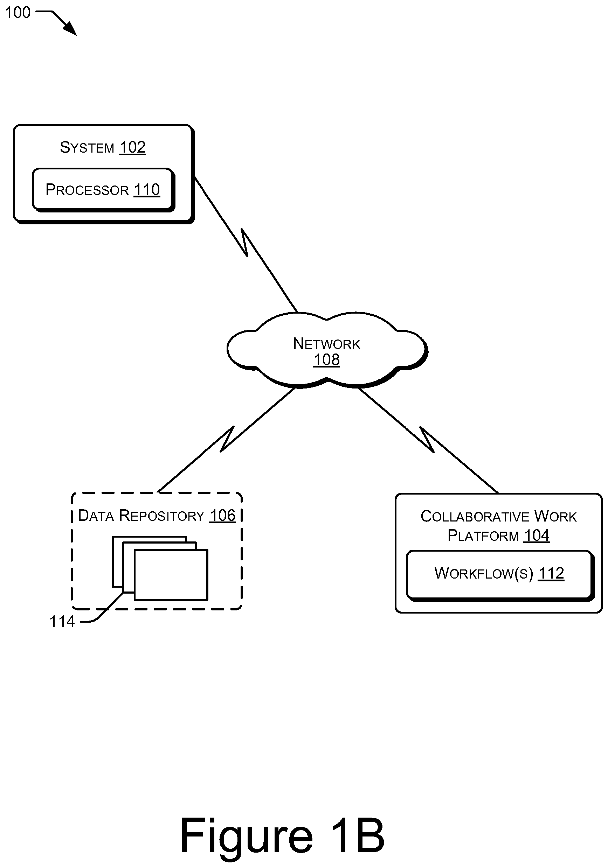

The system 102 may be communicably coupled with the collaborative work platform 104 and the data repository 106. In one example, the system 102 may be in direct communication with the collaborative work platform 104 and the data repository 106, as illustrated in Figure 1A, and may exchange data and signals with each other. Other configurations and/or architectures may also be possible. In one example, the system 102, the collaborative work platform 104, and the data repository 106 may be communicably coupled over a network 108, as illustrated in Figure 1B, and may exchange data and signals over the network 108. For instance, the system 102, the collaborative work platform 104, and the data repository 106 may be distributed across different locations and/or platforms and may be communicably coupled over the network 108 to assist inter-communications and exchange of data and signals. Examples of the network 108 may include, but are not limited to LAN, WAN, the internet, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 108 may include various network entities, such as transceivers, gateways, and routers. In an example, the network 108 may include any communication network that uses any of the commonly used protocols, for example, Hypertext Transfer Protocol (HTTP), and Transmission Control Protocol/Internet Protocol (TCP/IP).

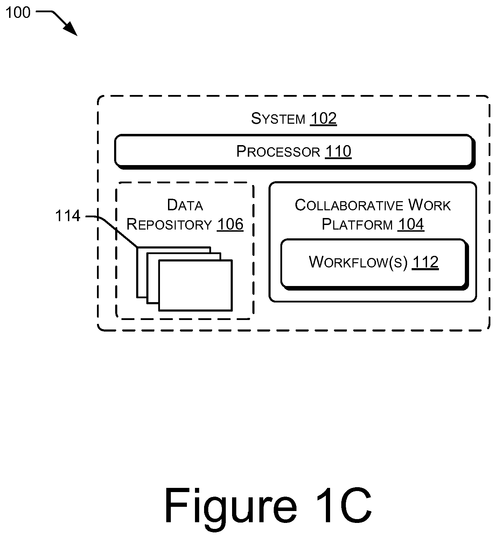

In yet another example, the system 102 may include the collaborative work platform 104 and the data repository 106, as illustrated in Figure 1C. Different architectures of the computing environment 100 have been discussed above. However, such examples and illustrations are not to be considered as limiting in nature and scope. Other obvious architectures of a computing environment may also be possible where multiple entities, such as the system 102, the data repository 106, and the collaborative work platform 104 may be communicably connected to exchange data and signals.

The computing environment 100 may be any computing environment related to, for example, one or more organizations. Examples of the organizations may include, but are not limited to, pharmaceutical manufacturing organizations, vehicle manufacturing organizations, electrical and electronic appliance manufacturing organizations, and food processing organizations.

The computing environment 100 may include the system 102. In one example, the system 102 may include a processor 110 configured for management of workflows. In one example, the system 102 may be associated with one or more organizations and may be responsible for management of one or more workflows of the organizations. For example, the system 102 may be associated with a pharmaceutical manufacturing organization and may be responsible for management of a workflow related to the development of one or more drugs. In another example, the system 102 may be associated with a vehicle manufacturing organization and may be responsible for management of one or more workflows related to production of a vehicle.

In one example, the system 102 may be communicably coupled with the collaborative work platform 104. The collaborative work platform 104, in one example, may be associated with an organization and may include workflow(s) 112 associated with the organization. In one example, the collaborative work platform 104 may be an application or software that may indicate the workflow(s) 112 associated with the organization. In another example, the collaborative work platform 104 may be a set of web pages that may indicate the workflow(s) 112 associated with the organization. In yet another example, the collaborative work platform 104 may be a cloud-based platform or application that may include the workflow(s) 112 associated with the organization. Further, in one example, the collaborative work platform 104 may be managed by the organization. In another example, the collaborative work platform 104 may be managed by an organization and may be offered as a service or platform to another organization. For example, the collaborative work platform may be offered as Platform as a Service (PaaS) or Software as a Service (Saas).

In one example, the collaborative work platform 104 may enable users to work collectively and collaboratively. The collaborative work platform 104 may be a user interactable platform where multiple users may interact and work collaboratively. In one example, the collaborative work platform 104 may have a Graphical User Interface (GUI) that may enable users to work collaboratively. The collaborative work platform 104 may be accessible to intended users, for example, through the system 102 and/or via the network 108. The intended users may be authorized users or users associated with the organization with which the collaborative work platform 104 is associated.

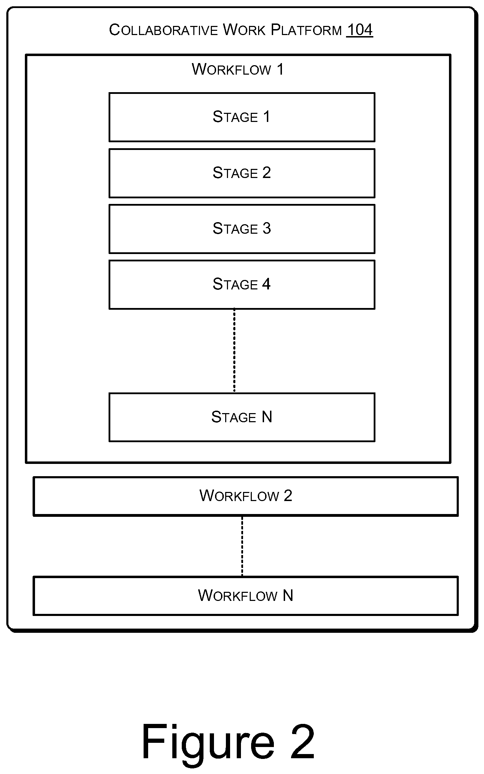

In one example, the collaborative work platform 104 may define workflow(s) 112 therein, as illustrated in Figure 2. The users may work collectively to complete the workflow(s) 112 defined in the collaborative work platform 104. Figure 2 illustrates a block diagram of the collaborative work platform 104, according to one example implementation. Figure 2 will be discussed in conjunction with Figrures 1A to 1C. As illustrated in Figure 2, the collaborative work platform 104 may include Workflow 1, Workflow 2,...Workflow N, where N is a natural number. The Workflow 1, Workflow 2,...Workflow N may hereinafter collectively be referred to as workflows 112 and individually be referred to as workflow 112.

In one example, each of the workflows 112 may include a plurality of stages correlated with each other and may be required to be completed to accomplish a workflow from start to finish. For example, the Workflow 1 may include a plurality of stages, such as Stage 1, Stage 2, Stage 3, Stage 4, ....Stage N, where N is a natural number, as illustrated in Figure 2. Each of the stages, in one example, may be correlated with the other, and the stages may be initiated and completed sequentially to advance the Workflow 1 towards completion. Considering the example of a workflow related to production of the vehicle, the correlated stages may be, for example, designing, modelling, manufacturing, and inspection of the vehicle. That is, in workflow related to production of the vehicle, the stages may be initiated and completed in an order such that a design of the vehicle is firstly prepared, followed by preparation of a 2D or 3D model. After completion of modelling, the manufacturing stage may be initiated and, finally, the manufactured vehicle may be inspected and tested at the last operational stage, thus concluding the production workflow of the vehicle. Thus, the collaborative work platform may include workflow(s) 112 and each workflow may include the plurality of correlated stages.

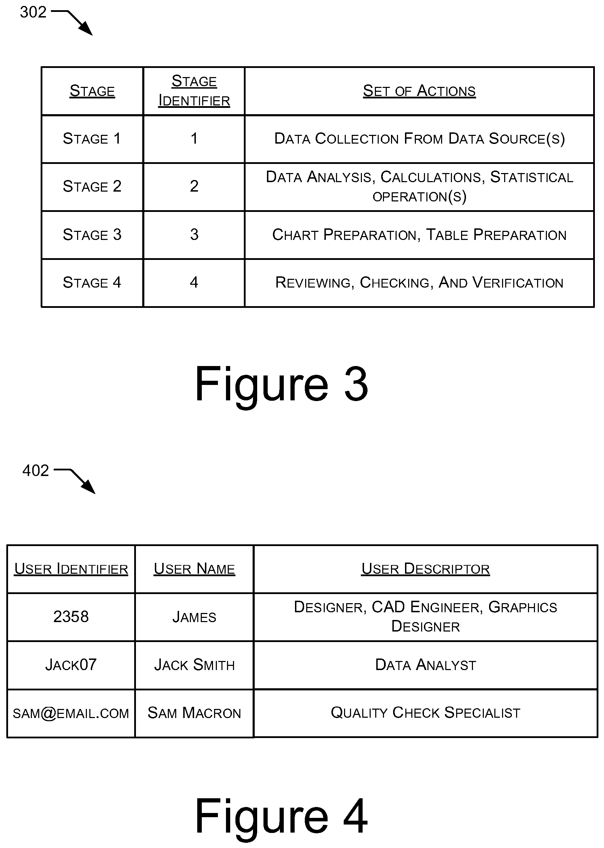

Further, each of the plurality of correlated stages may have a stage descriptor linked therewith. In one example, the stage descriptor may include a stage identifier uniquely identifying each stage of the workflow 112 and a set of actions associated with each stage of the workflow 112. Thus, each of the plurality of stages may have a corresponding stage descriptor associated therewith. In one example, such association has been illustrated with the help of a table in Figure 3. Figure 3 illustrates linking of stages with corresponding stage descriptors, according to one example implementation. Table 302 illustrates a column "Stage Identifier" indicating a unique identifier associated with each of the stages. For example, the stage identifier "1" may be associated with Stage 1 of the Workflow 1 illustrated in Figure 2. Similarly, the stage identifier "2" may be associated with Stage 2 of the Workflow 1, "3" may be associated with Stage 3 of the Workflow 1, and "4" may be associated with Stage "4" of the Workflow 1. Though serial numbers 1 to 4 have been illustrated as stage identifiers, however, any type of numerical, alphabetical, special characters, or a combination thereof may be used to uniquely identify each of the stages of the workflow 112. Further, Table 302 illustrates an exemplary set of actions associated with each of the stages. In one example, the set of actions may indicate one or more actions required to be performed at Stage 1 (having stage identifier "1") to advance the Workflow 1. For example, the Workflow 1 may be associated with preparation of a statistical distribution chart. Stage 1 may have the identifier "1" and set of actions as "Data Collection From Data Source(s)" being linked with Stage 1. Thus, the set of actions may indicate that data collection is required to be performed from various data sources when the Workflow 1 is at Stage 1. Similarly, each of the stages may have a set of actions linked therewith, as illustrated in Table 302.

In one example, the stage descriptors may be presented on the collaborative work platform 104 in association with each of the stages. For example, the stage descriptors may be rendered on the GUI of the collaborative work platform 104. In another example, the stage descriptors may be associated at back-end with each of the one or more stages of the workflow 112 and may not be rendered on the collaborative work platform 104. Further, though a table has been illustrated for indicating the stage descriptors, however, the stage identifier and the set of actions may be linked to the corresponding stages in any format or manner such that the stage descriptor is linked with the corresponding stage of the workflow 112. In other words, the stage descriptors may be mapped with the corresponding stage in any known manner or format.

Further, in one example, the plurality of correlated stages may be predefined on the collaborative work platform 104. For example, based on the requirements or objectives of the organization, one or more users, such as admins of an organization, may define the workflow 112 and the plurality of stages for that workflow 112 in the collaborative work platform 104. In another example, the workflow 112 may be defined by an individual user based on the requirements or objectives. For example, a user may define a list, i.e., workflow, having multiple tasks, i.e., correlated stages, that may be required to be completed to conclude the objective or requirements of the user. Further, in one example, the collaborative work platform 104 may enable a user to modify the workflow 112 and/or stages defined therein. The modification may include, for example, creation, deletion, and re-ordering of the stages. The modification may also include changes to the stage descriptor associated with each of the stages.

Further, the computing environment 100 may include the data repository 106 communicably coupled with the system 102 and the collaborative work platform 104. The data repository 106 may be any repository or storage unit implemented by physical, logical, and/or virtual storage devices. In one example, the data repository 106 may include a set of physical storage devices. In another example, the data repository 106 may include virtual stage devices being implemented on physical storage devices. In another example, the data repository 106 may include one or more physical or logical storage units that may either be located at the same location or distributed geographically.

In one example, the data repository 106 may store a set of data 114. The set of data 114 may include the stage descriptors linked with each of the plurality of correlated stages. The set of data 114 may further include user identity data associated with users. The users may be either independent users or users associated with an organization. The user identity data may include a user identifier uniquely identifying each of the users and a user descriptor indicating characteristics of each of the users. Examples of the characteristics may include, but are not limited to, roles and responsibilities, qualifications, skills, and experience of each of the users. Figure 4 illustrates a user database, according to one example implementation. Table 402 indicates the user database including the user identity data. The user identity data may include, for example, user identifier, user name, and user descriptor. The column "User Identifier" may include a user identifier associated with each of the users and uniquely identifies each of the users. The user identifier may be, for instance, an Identification number uniquely associated with each of the users. For example, a user may have the identification number "2358", as illustrated in Table 402. In another example, the user identifier may be, for instance, a user name uniquely associated with each of the users. For example, a user may have the user name "Jack07", as illustrated in Table 402. In another example, the user identifier may be, for instance, an email address uniquely associated with each of the users. For example, a user may have the email address "sam@email.com", as illustrated in Table 402.

Further, the user identity data may also include a corresponding user name associated with each of the user identifiers. The user name may be name of the user with which the user identifier is associated. For example, the user having the user identifier "2358" may have the user name "James". Similarly, other users may also have user name associated with their user identifiers. Furthermore, the user identity data may also include a corresponding user descriptor associated with at least one of the user identifier and the user name. For example, the user having the user identifier "2358" and the user name "James" may have "Designer, CAD Engineer, Graphics Designer" as associated user descriptor. Similarly, other users may also have user descriptor associated with at least one of the user identifier and the user name.

Thus, the computing environment 100 may include the system 102, the collaborative work platform 104 having the workflow 112 defined therein, and the data repository 106 storing the stage descriptor and the user identity data. The system 102, the collaborative work platform 104, and the data repository 106 may be communicably coupled with each other.

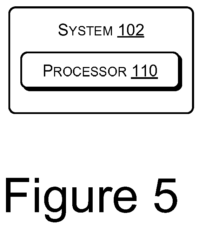

Figure 5 illustrates a block diagram of the system 102, according to one example implementation of the present subject matter. Figure 5 will be discussed in conjunction with Figures 1A to 5. In one example, the system 102 may assist in enhanced workflow management.

In one example, the system 102 may include the processor 110 configured to assist in enhanced workflow management. The system 102 may be communicably coupled with a collaborative work platform, such as the collaborative work platform 104, for managing workflows at the collaborative work platform 104. The collaborative work platform 104 may include, in one example, a workflow defined therein, such as the workflow 112. The workflow 112 may have the plurality of correlated stages, each having linked therewith the stage descriptor, as discussed above. The stage descriptor may include, in one example, the a stage identifier uniquely identifying each stage of the workflow 112 and the set of actions associated with each stage of the workflow 112.

In one example operation, the processor 110 may receive a tag creation signal upon occurrence of an interaction with an actionable component linked with the collaborative work platform 104. In one example, the actionable component may be the GUI of the collaborative work platform 104. Upon interaction, for example, double-clicking on the GUI, the processor 110 may receive the tag creation signal. In one example, the tag creation signal may be indicative of creation of a request to define a tag for being linked with one or more stages from amongst the plurality of correlated stages. That is, the tag creation signal may indicate a request to define a tag to be linked with one of the plurality of correlated stages. For example, the tag creation signal may indicate that a request has been created for defining a tag for being linked with a stage from amongst the plurality of correlated stages. The processor 110 may receive such a request from the collaborative work platform 104.

In response to receiving the tag creation signal, the processor may initiate acquisition of a user-defined tag content for being associated with the tag. In one example, a user may be requested to provide the user-defined tag content. The user may be the same user that interacted with the actionable component. For example, a first GUI may be rendered to acquire the user-defined tag content from the user for being associated with the tag. In one example, the user-defined tag content may be textual content provided by the user in a general language.

The processor 110 may then parse the user-defined tag content to derive a tag descriptor corresponding to the user-defined tag content. For example, the processor 110 may perform an analysis of the user-defined tag content to extract the tag descriptor. In one example, the processor 110 may perform natural language processing to extract keywords from the user-defined tag content to derive the tag descriptor. The processor 110 may derive at least one of a destination identifier and one or more actions. In one example, the destination identifier may uniquely identify a target destination, from amongst a plurality of target destinations, with which the user-defined tag content is to be linked. The target destination may be, for example, a stage and the plurality of target destinations may be the plurality of correlated stages. Thus, the destination identifier may be indicative of the stage with which the user-defined tag content is to be linked. Further, the one or more actions may be, in one example, action(s) to be performed in associated with the one or more stages. For example, the user-defined tag content may be parsed by the processor 110 to derive the one or more actions that the user wishes to be performed by another user when the workflow reaches that stage. Thus, the processor 110 may parse the user-defined tag content to derive the target destination, such as the stage of the workflow 112, and the one or more actions to be indicated for being performed by the other user when the workflow 112 reaches that particular stage.

Further, the processor 110 may determine a correlation between the tag descriptor and the stage descriptor linked with each of the plurality of correlated stages. In one example, the correlation may indicate semantic similarity between the tag descriptor and the stage descriptor linked with each of the plurality of correlated stages. The semantic similarity may indicate whether the destination identifier and/or the one or more actions included in the tag descriptor are correlated with the stage identifier and/or the set of actions associated with any of the plurality of stages.

Based on the correlation, the processor 110 may identify one or more stages, from amongst the plurality of correlated stages, correlating with the tag descriptor. For example, the processor 110 may identify the one or more stages having the stage identifier and/or the set of actions correalated with the destination identifier and/or the one or more actions included in the tag descriptor. That is, one or more stages may be identified that require performance of actions, for example, as illustrated in Table 302, that may be semantically similar to the actions included in the user-provided content. Thus, by determining correlation between the tag descriptor and the stage descriptor, the processor 110 may identify one or more stages suitable for the tag descriptor.

Once the one or more stages are identified, the processor 110 may associate the user-defined tag content, corresponding to the tag descriptor, with the identified one or more stages. For example, the processor 110 may create a relationship or linkage between the identified one or more stages and the user-defined tag content. In one example, the the user-defined tag content may be associated with the identified one or more stages in the form of the tag.

Further, the processor 110 may monitor initialization of the one or more identified stages. For example, the processor 110 may monitor the progress of the workflow. That is, the processor 110 may communicate with the collaborative work platform 104 to determine the stage at which the workflow 112 is. The processor 110 may thus be aware of initialization of the stages and, thereby the one or more identified stages, based on communication received from the collaborative work platform 104.

The processor 110, in response to initialization of the one or more identified stages, may generate an alert generation signal for indicating the user-defined tag content associated with the one or more identified stages. When the processor 110 determines that the one or more identified stages have been initialized, the processor 110 may generate the alert generation signal to indicate the user-defined tag content associated with the one or more identified stages. In one example, the alert generation signal may be instructions that may cause rendering of at least one of a visual indicator and an audio alert for indicating the user-defined tag content.

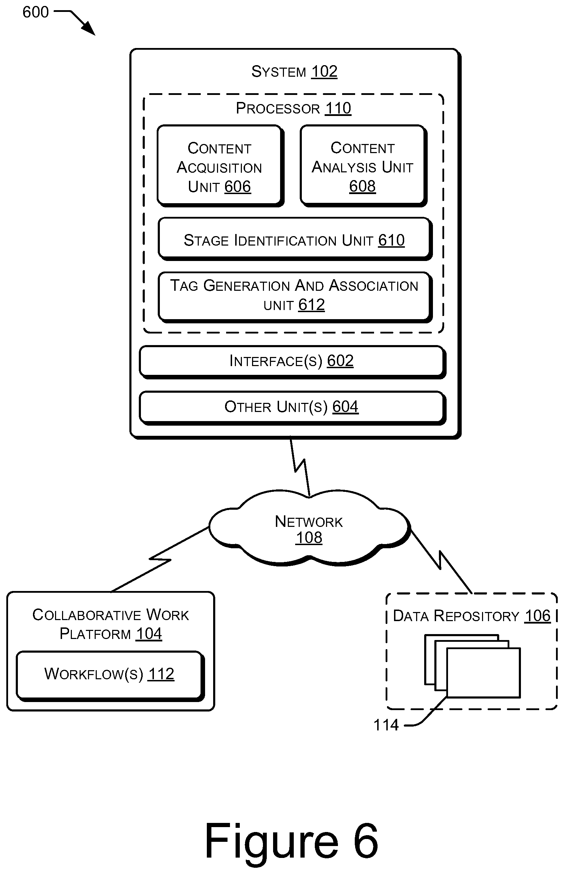

Figure 6 illustrates a computing environment 600 comprising the system 102, according to another example implementation. In one example, the computing environment 600 may be similar to the computing environment 100 discussed with reference to Figures 1A to 1C. The computing environment 300 may be any computing environment including the system 102 and the collaborative work platform 104. In one example, the computing environment 600 may also include the data repository 106. The computing environment 600 may thus be a network of such entities that may be communicably coupled with each other, for example, over the network 108.

The computing environment 100 may include the system 102 configured for management of the workflow(s) 112. The system 102 may function, in one example, as a manager responsible for managing the workflow(s) 112 in the computing environment 600. In one example, the system 102 may include the processor 110 that may be configured to at least assist in the management of the workflow(s) 112. The processor 110, in one example, may assist in managing the workflow(s) 112 by linking one or more tags with appropriate stages of the workflow(s) 112 and accordingly indicating the tags to one or more users, as will be discussed.

The processor 110 may be implemented as a dedicated processor, a shared processor, or a plurality of individual processors, some of which may be shared. Examples of the processor 110 may include, but are not limited to, microprocessors, microcomputers, microcontrollers, digital signal processors, central processing units, state machines, Artificial Intelligence (AI) based processors, machine learning-based processors, deep learning-based processors, system on chip (SOC), processing circuitries including one or more modules or engines, and/or any other devices that manipulate signals and data based on computer-readable instructions, and/or any other devices.

The system 102 may further include, in one example, interface(s) 602 that may allow communicably coupling the system 102, and/or the processor 110, with one or more other entities, such as the collaborative work platform 104, the data repository, and the network 108. The connection or coupling may be through a wired connection or a wireless connection.

In one example, the system 102 may further include other unit(s) 604. The other unit(s) 604 may include, in one example, a power supply unit and a communication unit. The power supply unit may, for example, manage distribution or supply of electrical current within the system 102 for functioning of the system 102. Further, the communication unit may be, in one example, a wireless communication unit. Examples of the communication unit may include, but are not limited to, Global System for Mobile communication (GSM) modules, Code-division multiple access (CDMA) modules, Bluetooth modules, network interface cards (NIC), Wi-Fi modules, dial-up modules, Integrated Services Digital Network (ISDN) modules, Digital Subscriber Line (DSL) modules, and cable modules. In one example, the communication unit may also include one or more antennas to enable wireless transmission and reception of data and signals. The communication unit may allow the system 102 to be communicably coupled with the collaborative work platform 104, the data repository, and the network 108. Also, the communication unit may allow the system 102 to transmit and receive data and signals to and from the collaborative work platform 104, the data repository, and the network 108.

The computing environment 600 may further include the collaborative work platform 104. The collaborative work platform 104 may include the one or more workflows 112, as illustrated in Figure 2. In one example, the collaborative work platform 104 may be an application having the workflow(s) 112 defined therein. In another example, the collaborative work platform 104 may be a set of web pages having the workflow(s) 112 defined therein. In yet another example, the collaborative work platform 104 may be a cloud-based platform or application having the workflow(s) 112 defined therein.

In one example, the collaborative work platform 104 may enable users to work collectively with each other to advance the workflow(s) 112 defined therein. The collaborative work platform 104 may enable multiple users to interact and work collaboratively. In one example, the collaborative work platform 104 may include a Graphical User Interface (GUI) that may enable users to interact with the workflow(s) 112 and work collaboratively to advance the workflow(s) 112 towards conclusion. The users may be, in one example, users associated with one or more organizations with which the workflow(s) 112 and/or the collaborative work platform 104 may be associated. In another example, the users may be independent users who may work collectively to advance the workflow(s) 112 towards completion.

In one example, each of the workflows 112 may include a plurality of correlated stages that may be required to be completed to advance the workflow towards completion. For example, as illustrated in Figure 2, the Workflow 1 may include the plurality of correlated stages, such as Stage 1, Stage 2, Stage 3, Stage 4, .... and Stage N. Each of the stages, in one example, may be correlated with the other, and the stages may be initiated and completed sequentially to advance the Workflow 1 towards completion. Thus, the collaborative work platform 104 may include the workflow(s) 112 defined therein and each of the workflow(s) 112 may include the plurality of correlated stages.

Further, each of the plurality of correlated stages may have a stage descriptor linked therewith. As discussed above, the stage descriptor of each of the plurality of correlated stages may include the stage identifier uniquely identifying each stage of the workflow(s) 112 and the set of actions associated with each stage of the workflow(s) 112, as exemplarily illustrated in Figure 3. In one example, the stage descriptors may be indicated on the collaborative work platform 104 in association with each of the correlated stages. For example, the stage descriptors may be rendered on the GUI of the collaborative work platform 104. In another example, the stage descriptors may be associated in back-end with each of the one or more stages of the workflow(s) 112 and may not be indicated on the collaborative work platform 104.

Further, in one example, the plurality of correlated stages may be predefined on the collaborative work platform 104. For example, based on the requirements or objectives of the organization, one or more users, such as admins of an organization, may define the workflow 112 and the plurality of stages for that workflow 112 in the collaborative work platform 104. In another example, the workflow 112 may be defined by an individual user based on the requirements or objectives. For example, a user may define a list, i.e., workflow, having multiple tasks, i.e., correlated stages, that may be required to be completed to conclude the objective or requirements of the user. Further, in one example, the collaborative work platform 104 may enable a user to modify the workflow 112 and/or stages defined therein. The modification may include, for example, creation, deletion, and re-ordering of the stages. The modification may also include changes to the stage descriptor associated with each of the stages.

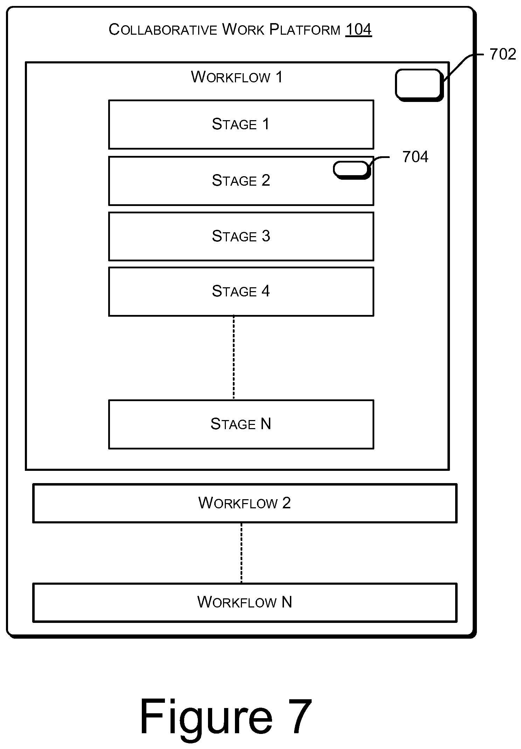

Further, in one example, the collaborative work platform 104 may include an actionable component. In one example, the actionable component may be the GUI of the collaborative work platform 104. Other examples of the actionable component may include, but are not limited to, a button, a slider, and a check box. Figure 7 illustrates an actionable component 702 associated with the collaborative work platform 104, according to one example implementation. The actionable component 702 may be a button on which a user may interact to define a tag, as will be discussed. In one example, each of the workflows 112 may include a dedicated actionable component associated therewith.

Further, in one example, the collaborative work platform 104 may be a REACT-based platform. The collaborative work platform 104 may be built, for example, with REACT Javascript. REACT may provide the ability to detect interactions occurring with the collaborative work platform 104 or elements associated therewith, such as the actionable component 702. The REACT may include event handlers, for example, onClick and onSubmit that may be attached to the GUI of the collaborative work platform 104 or the actionable component 702. Upon interaction, the event handlers may be triggered and appropriate actions may then be initiated based on the interaction.

Further, the computing environment 100 may include the data repository 106 communicably coupled with the system 102 and the collaborative work platform 104. The data repository 106 may be any repository or storage unit implemented by physical, logical, and/or virtual storage devices. In one example, the data repository 106 may store the set of data 114. The set of data 114 may include the stage descriptors linked with each of the plurality of correlated stages. The set of data 114 may further include user identity data associated with users, as discussed above with reference to Figure 4. The data repository 106 may thus act as a database having stored therein the stage descriptors and the user identity data.

Thus, the computing environment 100 may include the system 102, the collaborative work platform 104 having the workflow 112 defined therein, and the data repository 106 storing the stage descriptor and the user identity data.

In one example operation, the processor may receive a tag creation signal upon occurrence of an interaction with the actionable component linked with the collaborative work platform 104. The tag creation signal may be indicative of creation of a request to define a tag for being liked with one or more stages from amongst the plurality of correlated stages of the workflow 112. For example, the tag creation signal may be indicative of creation of a request to define a tag for being liked with STAGE 2 of the from amongst the plurality of correlated stages of the Workflow 1.

In one example, occurrence of an interaction with the actionable component may cause reception of the tag creation signal. The actionable component may be an interactive GUI component being rendered on an interface, such as the GUI, associated with the collaborative work platform 104. As discussed above, the collaborative work platform 104 may include RECT-based event handlers that may be triggered upon interaction with the elements, such as the actionable components, associated with the collaborative work platform 104. In one example, an event handler may be triggered upon occurrence of clicking on the actionable component 702. For example, the event handler associated with the actionable component 702, or button 702, may be triggered upon receiving a click from the user. Thus, upon occurrence of the actionable input or interaction with the actionable component 702, corresponding event handlers may be triggered. Upon triggering of the event handlers, the processor 110 may receive the tag creation signal being indicative of the request to define the tag. In other words, upon receiving the tag creation signal, the processor 110 may ascertain that the user wishes to define the tag for one or more stages, from amongst the plurality of stages.

In another example, an event handler may be triggered upon receiving actionable input on the collaborative work platform 104. The actionable input may be, for example, double-clicking on the GUI of the collaborative work platform 104. In another example, the actionable input may be double-clicking on any of the plurality of correlated stages associated with the workflow 112 defined in the collaborative work platform. For example, the user may double-click on the stage with which the user wishes to define the tag.

In response to receiving the tag creation signal, the processor 110 may initiate acquisition of the user-defined tag content for being associated with the tag. In one example, the processor 110 may include a content acquisition unit 606 configured to initiate a process for acquisition of the user-defined tag content. In one example, the content acquisition unit 606 may cause rendering of a first GUI to acquire the user-defined tag content for being associated with the tag. In one example, the first GUI may be rendered on the collaborative work platform 104. For example, the first GUI may be rendered as an overlay over the workflow 112, or the correlated stages of the workflow 112, being rendered on the collaborative work platform 104. In one example, the first GUI may include at least a content receiving area to receive the user-defined tag content. The content receiving area may be, for example, a text box to enable the user to provide the user-defined tag content. The user-defined tag content may be, for example, textual content. However, other types of user-defined tag content may also be received in the content receiving area. For example, the content receiving area may be a drag-and-drop box where the user may upload any type of file or document as the user-defined tag content. From the first GUI, the content acquisition unit 606 may acquire the user-defined tag content. In one example, the user defined tag content may be provided in a natural language by the user. For example, the user may provide "Jack, please perform analysis of data" as the user-defined tag content.

The processor 110 may then trigger parsing of the user-defined tag content to derive a tag descriptor corresponding to the user-defined tag content. In one example, the tag descriptor may include at least one of a destination identifier uniquely identifying a target destination, from amongst a plurality of target destinations, with which the user-defined tag content is to be linked and one or more actions to be performed in association with the one or more stages of the workflow 112.

In one example, the processor 110 may include a content analysis unit 608. The content analysis unit 608 may be configured to parse the user-defined tag content and to derive the tag descriptor corresponding to the user-defined tag content. In one example, the content analysis unit 608 may use techniques such as tokenization, part-of-speech tagging, named entity recognition (NER), and keyword extraction to identify and extact keywords for the tag descriptor. For example, the content analysis module 608 may split the user-defined tag content into individual words or tokens. A part of speech, such as noun, verb, or adjective, may then be assigned to each token to identify a grammatical structure of the text. The content analysis module 608 may then perform NER to identify and extract details for the tag descriptor. For example, the content analysis unit 608 may identify and extract the destination identifier to uniquely identify a target destination, from amongst the plurality of target destinations. In one example, the target destination may be one or more stages from amongst the plurality of correlated stages. In another example, the target destination may be a user name or user identifier. Similarly, the content analysis unit 608 may identify and extract the one or more actions from the user-defined tag content. Considering the above example, the content analysis unit 608 may derive "Jack" as the target destination with which the user-defined tag content is to be linked and "perform data analysis" as the one or more actions required to be performed in association with the one or more stages of the workflow 112.

In another example, the processor 110, or the content analysis unit 608 of the processor 110, may extract or derive the tag descriptor from the user-defined tag content using a Large Language Model (LLM) by using techniques such as keyword extraction, NER, or pattern matching. For example, the processor 110 may prompt a trained LLM with specific queries or keywords related to the details required to be extracted. For instance, the processor 110 may prompt the trained LLM model with user-defined tag content to have the tag descriptor extracted. The LLM may accordingly generate responses that may include such details, such as the tag descriptor. In one example, the processor 110 may also be configured with post-processing techniques to filter and extract relevant information, such as the tag descriptor, from the responses provided by the LLM. The content analysis unit 608 may be, in another example, a natural language processing engine that may be triggered for parsing the user-defined tag content to derive the tag descriptor corresponding to the user-defined tag content.

Further, the processor 110 may determine a correlation between the tag descriptor derived from the user-defined tag content and the stage descriptor linked with each of the plurality of correlated stages. In one example, the content analysis unit 608 may be configured to determine the correlation. The content analysis unit 608 may be, in one example, a natural language processing engine that may be triggered for parsing the user-defined tag content to derive the tag descriptor corresponding to the user-defined tag content.

may perform, for example, Natural Language Processing (NLP) or utilize a trained Large Language Model (LLM) to determine the correlation between the tag descriptor and the stage descriptor linked with each of the plurality of correlated stages. For example, the content analysis unit 608 may utilize specialized NLP functions to encode the tag descriptor and the stage descriptor linked with each of the plurality of correlated stages into vector forms. Thus, the tag descriptor and one or more stages, having similar stage descriptors, may have similar encoding, i.e., vectors. In one example, the vectors may be numerical numerical vectors. Alternatively, the content analysis module 608 may utilize any trained machine learning model or deep learning model to determine the correlation between the derived tag descriptor and the stage descriptor associated with each of the plurality of correlated stages. The vectors derived based on the tag descriptor may be compared with the vectors derived for the stage descriptor linked with each of the plurality of correlated stages. Based on the comparison, the correlation between the tag descriptor and the stage descriptor linked with each of the plurality of correlated stages may be determined.

Further, the processor 110 may identify one or more stages from amongst the plurality of correlated stages correlating with the tag descriptor. In one example, identification of the one or more stages may be based on a correlation score. In one example, the processor 110 may include a stage identification unit 610 configured to identify the one or more stages correlated with the tag descriptor. In one example, the processor 110, or the stage identification unit 610 of the processor 110, may compute a correlation score to quantify the correlation between the tag descriptor and the stage descriptor linked with each of the plurality of correlated stages. The correlation score may indicate, for example, an extent of semantic similarity between the derived tag descriptor and the stage descriptor associated with each of the plurality of correlated stages. For example, vectors derived for the tag descriptor and the vectors derived for the stage descriptor linked with Stage 1, as illustrated in Figure 3, may be compared. Similarly, vectors derived for the tag descriptor and the vectors derived for the stage descriptor linked with Stage 2 may be compared. Similarly, the vectors derived for the tag descriptor and the vectors derived for the stage descriptor linked with each of the stages may be compared to determine a correlation score.

Calculating the correlation score between vectors may involve determining the degree to which they may vary together, or are similar to each other. This can be achieved using various correlation coefficients, for example, Pearson, Spearman, or Kendall tau. These coefficients may provide numerical measurements of relationship between the vectors. In one example, the stage identification unit 610 may use measures like Pearson Correlation coefficient by computing mean of each vector, computing covariance between the two vectors, computing standard deviation of each vector, and then use these values to calculate the Pearson correlation coefficient. In another example, the processor 110 may utilize built-in libraries to calculate correlation coefficients. For example, in Python programming language, NumPy function may be called to determine the correlation coefficient. In yet another example, the stage identification unit 610 may perform any mathematical method for comparing the vectors derived based on the tag descriptor and the vectors derived for the stage descriptor linked with each of the plurality of correlated stages. For example, the processor 110 may compute the mean, covariance, and standard deviation for the vectors and then compute correlation coefficients. In one example, the values of correlation coefficients may be the correlation score.

By comparing the vectors, relationship, such as an extent of similarity between the vectors of the tag descriptor and the vectors of the stage descriptor, may be determined. Based on the comparison, the processor 110 may estimate the correlation score. For example, more will be the similarity between the vectors, the higher the correlation score would be. For example, if the correlation score, or value of correlation coefficients, is between 0.7 to 1, the vectors may be determined to be highly correlated.

In one example, the processor 110 may compare the correlation score with a threshold correlation score to identify the one or more stages correlating with the tag descriptor. Based on the comparison, the processor 110 may identify the one or more stages correlating with the tag descriptor. In one example, the threshold correlation score may be 0.5. If the processor 110 determines that the correlation score (determined for, say, the tag descriptor and the stage descriptor linked with Stage 2) is higher than the threshold correlation score, the processor may identify the one or more stages (say, the Stage 2) as correlated with the tag descriptor. For example, the processor 110 may identify Stage 2 as being correlated to the tag descriptor as the stage descriptor linked with the Stage 2 (having the set of actions - "Data Analysis, Calculations, Statistical operation(s)") appears to be semantically relevant to the tag descriptor ("Jack" and "perform data analysis"). Though an example has been illustrated for determining correlation by considering the set of actions and the user descriptor, however, other parameters such as the user identifier, user name, and stage identifier may also be considered to identify the relevance of the tag descriptor with the stage descriptor.

In one example, the threshold correlation score may be modifiable. In one example, the threshold correlation score may be modified through the collaborative work platform 104. The threshold correlation score may be modified based on selection criteria. For example, if matches with high correlation score are required, the threshold score may be increased.

Thus, the processor 110 may identify the one or more stages, from amongst the plurality of correlated stages, correlating with the tag descriptor. The processor 110 may then associate the user-defined tag content, corresponding to the tag descriptor, with the identified one or more stages. In one example, the processor 110 may include a tag generation and association unit 612. The tag generation and association unit 612 may generate a tag and associate the user-defined tag content with the tag. In one example, the tag may be a text box and the user-defined tag content may be embedded in the text box. Further, the tag generation and association unit 612 may associate the tag, and thus the user-defined tag content, with the identified one or more stages. For example, the user-defined tag content "Jack, please perform analysis of data" may be embedded in the tag and associated with the identified Stage 2. Figure 7 illustrates a tag 704 being associated with Stage 2 of Workflow 1 and being displayed on the GUI of the collaborative work platform 104, according to one example. However, the tag may be associated in other ways also. For example, the tag may be logically associated with Stage 2 and stored in the data repository 106 and may not be visible at the GUI of the collaborative work platform 104. Thus, based on the user-defined tag content, the processor 110 may automatically identify the correlating one or more stages of the workflow 112 and automatically generate and associate the tag with the identified one or more stages.

Further, the processor 110 may monitor initialization of the one or more identified stages. In one example, the processor 110, or the tag generation and association unit 612 of the processor 110, may determine an activation status of each of the plurality of correlated stages to ascertain initialization of the one or more identified stages. In one example, the activation status may be determined based triggering of the event handlers. For example, when Workflow 1 reaches the identified stage, such as Stage 2, the event handler associated with Stage 2 may be triggered. In response to the triggering of the event handler, the processor 110 may determine that the Workflow 1 has reached Stage 2. The processor 110 may accordingly determine the activation status as, for example, "active". However, if no indication of such triggering has been received, the processor 110 may accordingly determine the activation status as, for example, "inactive" for Stage 2.

Based on the activation status, the processor 110 may ascertain to generate the alert generation signal. In one example, when the processor 110 ascertains that the activation status is "active" for Stage 2, the processor 110 may determine that Stage 2 has been initialized. In response to initialization of the one or more identified stages, such as Stage 2, the processor 110 may generate the alert generation signal for indicating the user-defined tag content associated with the one or more identified stages.

In one example, the processor 110 may cause rendering of a visual indicator for indicating the user-defined tag content in response to generation of the alert generation signal. For example, the processor 110 may trigger rendering of a second GUI to render the visual indicator. the second GUI may be, for instance, a text box being rendered on the GUI of the collaborative work platform 104. In another example, the visual indictor may be indication of the tag 704 itself for indicating that the user-defined tag content is associated with the one or more identified stages.

In another example, the processor 110 may cause, in response to generation of the alert generation signal, generation of an audio indication for indicating the user-defined tag content. The processor 110 may trigger translation of the user-defined tag content into the audio indication. For instance, the processor 110 may utilize trigger text-to-speech (TTS) conversion functionality. The processor 110 may trigger, for instance, TTS encoding softwares or one or more Application Programming Interfaces (APIs) for translating the user-defined tag content into audio indication.

Therefore, when the workflow reaches the identified one or more stages, the user may then automatically be presented with the user-defined tag content. The user may, thus, no longer have to initiate any complex search operations to determine the stage(s) that are pending for action at his end. The user indicated in the user-defined tag content may automatically be prompted with the user-defined tag when the identified one or more stages of the workflow 112 are initialized.

Further, in one example the processor 110 may ascertain to generate the alert generation signal based on status of a session between the target destination and the collaborative work platform 104. In one example, where the target destination may be a user (based on the user identifier and the user name), the processor 110 may monitor status of the session between the user and the collaborative work platform 104. The status may indicate whether the session is established or not. In one example, the session may be established upon logging in on the collaborative work platform 104. Since the collaborative work platform 104, in one example, may be a REACT-based platform, the processor 110 may receive communication, for example, from event handlers indicating that a user may have logged in on the collaborative work platform 104. Based on the communication, the processor 104 may monitor status of the session. For example, if processor 110 receives any communication from the collaborative work platform 104 indicating that the session has been established, the processor 110 may ascertain to generate the alert generation signal. However, if processor 110 receives any communication from the collaborative work platform 104 indicating that the session has not been established, the processor 110 may ascertain not to generate the alert generation signal. Thus, the alert generation signal may only be generated, in one example, upon establishment of the session. That is, in one example, the user-defined tag content may only be indicated when the workflow 112 has reached the identified one or more stages and the session has been established. Therefore, when the workflow reaches the identified one or more stages, and the user logs in, the user may then be presented with the user-defined tag content. The user may thus no longer have to initiate any complex search process to determine the stage(s) that are pending for action at his end.

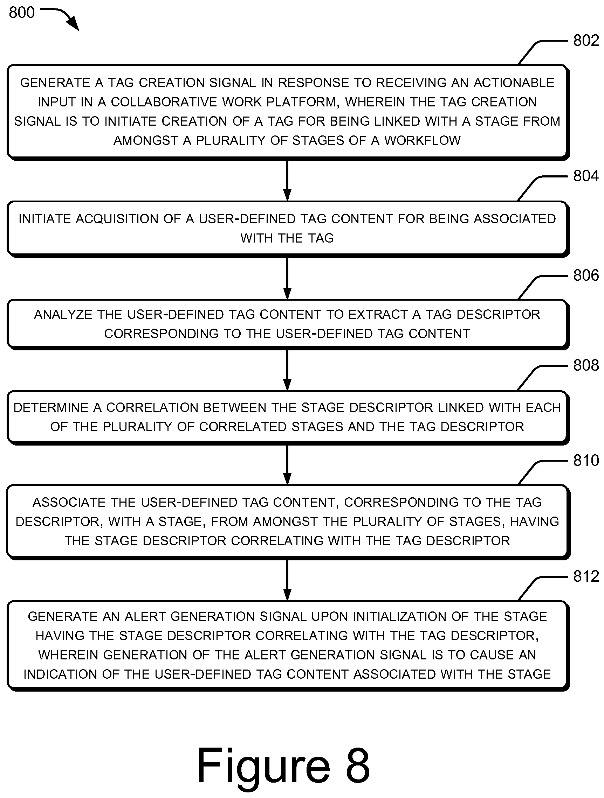

Figures 8 to 9B illustrate exemplary methods 800 and 900, respectively, for managing workflow. The order in which the methods are described is not intended to be construed as a limitation, and any number of the described method blocks may be combined in any order to implement the methods, or an alternative method. Furthermore, methods 800 and 900 may be implemented by processing resource or computing device(s) through any suitable hardware, non-transitory machine-readable instructions, or combination thereof.

It may also be understood that methods 800 and 900 may be performed by programmed computing devices, such as the processor 110, as depicted in Figures 1A-1C, 5, and 6. Furthermore, the methods 800 and 900 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. While the methods 800 and 900 are described below with reference to the processor 110 and the system 102 as described above; other suitable systems for the execution of these methods may also be utilized. Additionally, implementation of these methods is not limited to such examples.

Figure 8 illustrates the method 800 for managing workflow, according to an example implementation.

At block 802, a tag creation signal may be generated in response to receiving an actionable input in a collaborative work platform, where the tag creation signal is to initiate creation of a tag for being linked with a stage from amongst a plurality of stages of a workflow. Further, each of the plurality of stages may have a stage descriptor linked therewith. In one example, the stage descriptor may include a stage identifier uniquely identifying each stage of the workflow and a set of actions associated with each stage of the workflow.

At block 804, acquisition of a user-defined tag content may be initiated for being associated with the tag. In one example, the user-defined tag content may be acquired from the collaborative work platform 104. The user-defined tag content may be provided by a user.

At block 806, the user-defined tag content may be analyzed to extract a tag descriptor corresponding to the user-defined tag content. In one example, the user-defined tag content may be parsed to extract the tag descriptor. The tag descriptor, in one example, may include at least one of a destination identifier uniquely identifying a target destination, from amongst a plurality of target destinations, with which the user-defined tag content is to be linked and an action to be performed in association with the stage of the workflow.

At block 808, a correlation may be determined between the stage descriptor linked with each of the plurality of correlated stages and the tag descriptor. In one example, the stage descriptor associated with each of the plurality of stages and the derived tag descriptor may be translated into vector forms. One or more mathematical operations may then be performed on the vector forms to determine the stage descriptor that seems to be correlating with the tag descriptor.

At block 810, the user-defined tag content, corresponding to the tag descriptor, may be associated with a stage, from amongst the plurality of stages, having the stage descriptor correlating with the tag descriptor. Based on the correlation, the stage descriptor that seems to be correlating with the tag descriptor may be determined. Accordingly, the stage associated with the correlating stage descriptor may be determined and the user-defined tag content may then be associated with the stage.

At block 812, an alert generation signal may be generated upon initialization of the stage having the stage descriptor correlating with the tag descriptor, where generation of the alert generation signal is to cause an indication of the user-defined tag content associated with the stage. In one example, initialization of the plurality of stages may be monitored. Upon determining that the stage, that has the stage descriptor correlating with the tag descriptor, has been initialized, the aler generation signal may be generated. Generation of the alert generation signal may cause rendering of an indication of the user-defined tag content associated with the stage.

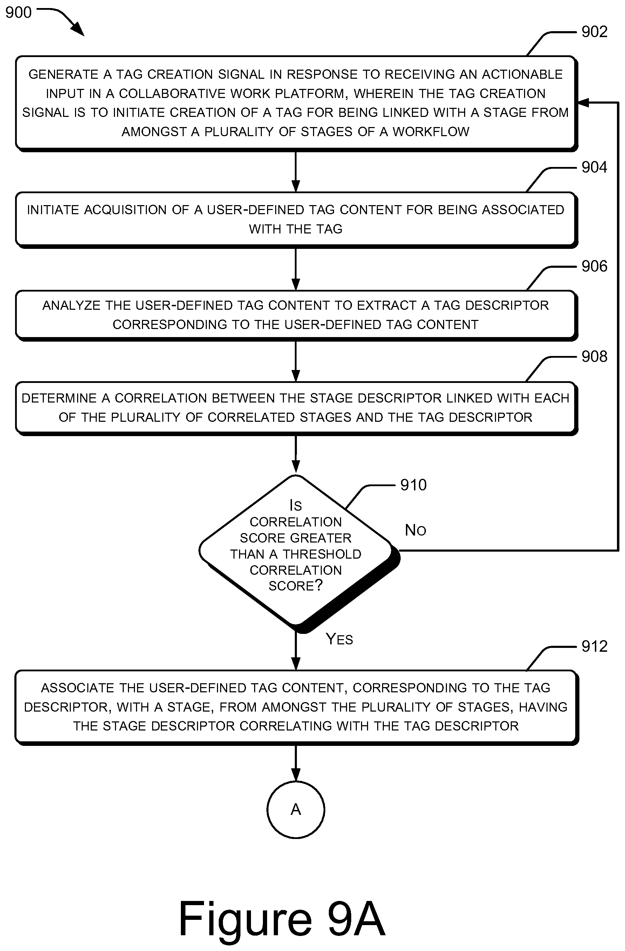

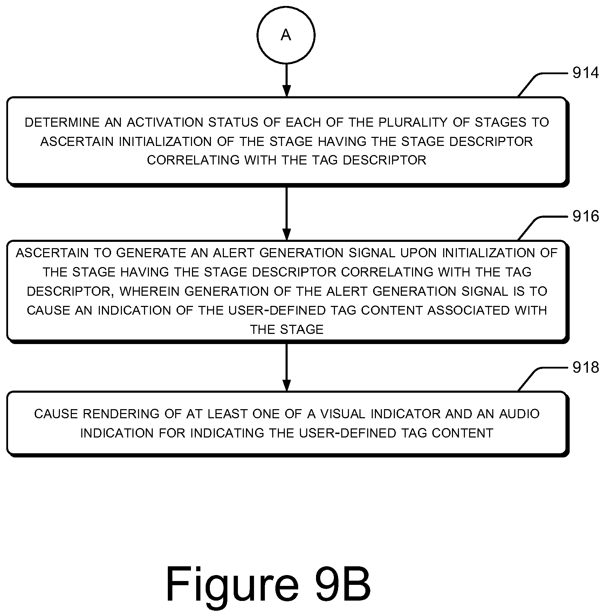

Figures 9A and 9B illustrate the method 900 for managing the network transactions, according to another example implementation.

At block 902, a tag creation signal may be generated in response to receiving an actionable input in a collaborative work platform, where the tag creation signal is to initiate creation of a tag for being linked with a stage from amongst a plurality of stages of a workflow. In one example, the tag creation signal may be received in response to occurrence of an interaction with an actionable component, such as the actionable component 702 of the collaborative work platform 104. In another example, the tag creation signal may be received in response to occurrence of an interaction with the GUI of the collaborative work platform 104. The interaction may be, for example, performing one or more clicks on the actionable component 704, the GUI of the collaborative work platform 104, or a stage from amongst the plurality of stages. Further, each of the plurality of stages may have a stage descriptor linked therewith. In one example, the stage descriptor may include a stage identifier uniquely identifying each stage of the workflow and a set of actions associated with each stage of the workflow.

At block 904, acquisition of a user-defined tag content may be initiated for being associated with the tag. In one example, the user-defined tag content may be acquired from the collaborative work platform 104. In one example, the first GUI may be rendered on the collaborative work platform 104 to acquire the user-defined tag content from a user. The first GIU may be an interface where the user may be allowed to provide content of any format. For example, the first GUI may allow a user to provide textual content, as the user-defined tag content which is to be associated with the tag.

At block 906, the user-defined tag content may be analyzed to extract a tag descriptor corresponding to the user-defined tag content. In one example, the user-defined tag content may be parsed to extract the tag descriptor. The tag descriptor may be extracted by utilizing NLP or LLM. The tag descriptor, in one example, may include at least one of a destination identifier uniquely identifying a target destination, from amongst a plurality of target destinations, with which the user-defined tag content is to be linked and an action to be performed in association with the stage of the workflow. NLP or trained LLM functionalities may be used to extract the destination identifier and the action from the user-defined tag content.

At block 908, a correlation may be determined between the stage descriptor linked with each of the plurality of correlated stages and the tag descriptor. In one example, the stage descriptor associated with each of the plurality of stages and the derived tag descriptor may be translated into vector forms. One or more mathematical operations may then be performed on the vector forms to determine the stage descriptor that seems to be correlating with the tag descriptor. Alternatively, a trained machine learning model or deep learning model may be utilized to determine the correlation between the derived tag descriptor and the stage descriptor associated with each of the plurality of correlated stages. The vectors derived based on the tag descriptor may be compared with the vectors derived for the stage descriptor linked with each of the plurality of correlated stages. Based on the comparison, the correlation between the tag descriptor and the stage descriptor linked with each of the plurality of correlated stages may be determined.

At block 910, it may be determined whether a correlation score is greater than a threshold correlation score. In one example, based on the correlation between the tag descriptor and the stage descriptor linked with each of the plurality of correlated stages, a correlation score may be determined for each such correlation. For example, a correlation score may be determined based on the correlation between the stage descriptor linked with Stage 1 and the tag descriptor. Another correlation score may be determined based on the correlation between the stage descriptor linked with Stage 2 and the tag descriptor. Similarly, the correlation score may be determined for each correlation between the tag descriptor and the stage descriptor linked with each of the plurality of correlated stages.

The correlation score may quantify the correlation between the tag descriptor and the stage descriptor linked with each of the plurality of correlated stages. The correlation score, in one example, may be computed based on a comparison of the derived vectors. For example, vectors derived for the tag descriptor and the vectors derived for the stage descriptor linked with Stage 1 may be compared. Similarly, vectors derived for the tag descriptor and the vectors derived for the stage descriptor linked with Stage 2 may be compared. By comparing the vectors, the degree with which the vectors vary, or are similar to each other may be interpreted. This can be achieved using various correlation coefficients, for example, Pearson, Spearman, or Kendall tau. In another example, the processor 110 may utilize built-in libraries to calculate correlation coefficients. For example, in Python programming language, NumPy function may be called to determine the correlation coefficient. In one example, the values of correlation coefficients may be the correlation score.

Further, the correlation score may be compared with the threshold correlation score to identify the one or more stages correlating with the tag descriptor. Based on the comparison, the one or more stages correlating with the tag descriptor may be determined. If it is determined that the correlation score (determined for, say, the stage descriptor linked with Stage 2 and the tag descriptor) is greater than the threshold correlation score, the one or more stages (say, the Stage 2) may be identified as correlated with the tag descriptor, and the method may follow the Yes path to block 912.

At block 912, the user-defined tag content, corresponding to the tag descriptor, may be associated with a stage, from amongst the plurality of stages, having the stage descriptor correlating with the tag descriptor. Based on the correlation, the stage descriptor that correlates with the tag descriptor may be determined. Accordingly, the stage associated with the correlating stage descriptor may be determined and the user-defined tag content may then be associated with the stage, and the method may then continue to block A.

From block A and at block 914, an activation status of each of the plurality of stages may be determined to ascertain initialization of the stage having the stage descriptor correlating with the tag descriptor. In one example, initialization of the one or more identified stages may be monitored by determining the activation status of each of the plurality of correlated stages, to ascertain initialization of the one or more identified stages. In one example, the activation status may be determined based triggering of the event handlers associated with the collaborative work platform 104. For example, if it is determined that the workflow has reached the identified stage, event handlers associated with the identified stage may be triggered. Upon triggering of the event handlers, the activation status for the identified stage may be determined to be as, for example, "1". However, if no indication of such triggering has been received, the activation status may be determined to be as, for example, "0".

At block 916, it may be ascertained to generate an alert generation signal upon initialization of the stage having the stage descriptor correlating with the tag descriptor. In one example, based on the activation status, it may be ascertained whether the alert generation signal is to be generated. For example, when it is determined that the activation status is "1" for the one or more identified stage, it may be ascertained that the alert generation signal should be generated to indicate the user-defined tag content associated with the one or more identified stages. However, when it is determined that the activation status is "0" for the identified stage, it may be ascertained that the alert generation signal should not be generated.

At block 918, rendering of at least one of a may be caused for indicating the user-defined tag content. In one example, at least one of the visual indicator and the audio indication may be rendered on the collaborative work platform 104. The visual indicator may be, for example, a textual representation of the user-defined tag content and the audio indication may be a speech output representing the user-defined tag content.

However, if at block 910, it is determined that the correlation score is less than or equal to the threshold correlation score, the method may follow the No path and return to block 902. That is, If it is determined that the correlation score (determined for, say, the stage descriptor linked with Stage 1 and the tag descriptor) is less than or equal to the threshold correlation score, the one or more stages (say, the Stage 1) may be identified as contrasting with the tag descriptor, and the method may follow the No path to block 902.

Therefore, the user may be enabled to provide data, i.e., the user-defined tag content, in natural language, and the user-defined tag content may automatically be processed and associated with an intended stage of the workflow. Further, when the workflow reaches the identified one or more stages, an intended user, for whom the user-defined tag content was defined, may automatically be indicated with the user-defined tag content associated with the identified one or more stages.

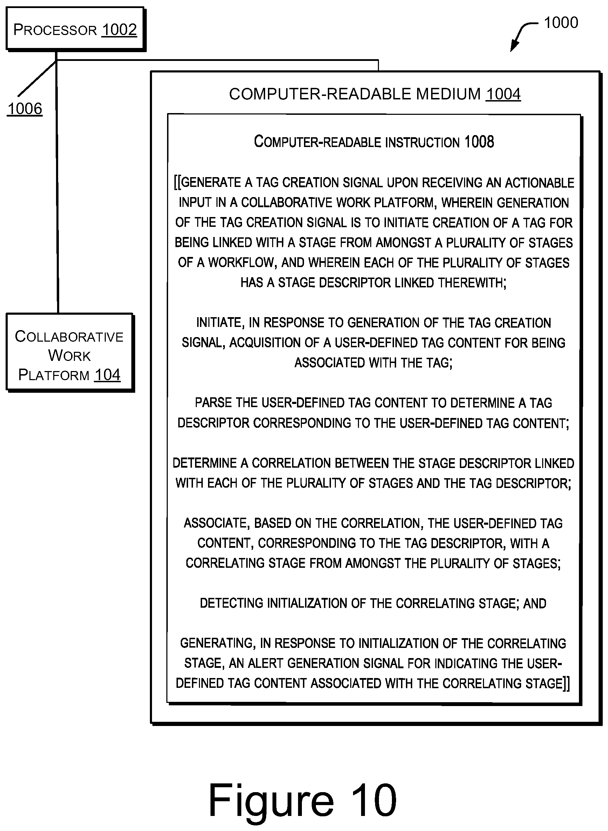

Figure 10 illustrates a non-transitory computer-readable medium for managing workflow in a collaborative work environment, in accordance with an example of the present subject matter.

In an example, the computing environment 1000 includes a processor 1002 communicatively coupled to a non-transitory computer-readable medium 1004 through communication link 1006. In an example, the processor 1002 may have one or more processing resources for fetching and executing computer-readable instructions from the non-transitory computer-readable medium 1004. The processor 1002 and the non-transitory computer-readable medium 1004 may be implemented, for example, in the system 102.

The non-transitory computer-readable medium 1004 may be, for example, an internal memory device or an external memory. In an example implementation, the communication link 1006 may be a network communication link, or other communication links, such as a PCI (Peripheral component interconnect) Express, USB-C (Universal Serial Bus Type-C) interfaces, I2C (Inter-Integrated Circuit) interfaces, etc. In an example implementation, the non-transitory computer-readable medium 1004 includes a set of computer-readable instructions 1008 which may be accessed by the processor 1002 through the communication link 1006. The processor 1002 and the non-transitory computer-readable medium 1004 may also be communicatively coupled to the collaborative work platform 104 over the network communication link 1006.

Referring to Figure 10, in an example, the non-transitory computer-readable medium 1004 includes computer-readable instructions 1008 that may cause the processor 1002 to generate a tag creation signal upon receiving an actionable input in the collaborative work platform 104. The actionable input may be, for example, performing one or more clicks on GUI of the collaborative work platform or the button 702. Further, generation of the tag creation signal may initiate creation of a tag for being linked with a stage from amongst a plurality of stages of the workflow 112 defined in the collaborative work platform 104.

Each of the plurality of stages may have a stage descriptor linked therewith. The stage descriptor, in one example, may include a stage identifier uniquely identifying each stage of the workflow 112 and a set of actions associated with each stage of the workflow 112.

The instructions 1008 may further cause the processor 1002 to initiate, in response to generation of the tag creation signal, acquisition of a user-defined tag content for being associated with the tag. In one example, the processor 1002 may cause rendering of at least one interface that may allow a user to provide the user-defrined tag content. The interface, in one example, may be rendered on the GUI of the collaborative work platform 104.

The instructions 1008 may further cause the processor 1002 to parse the user-defined tag content to determine a tag descriptor corresponding to the user-defined tag content. The tag descriptor, in one example, may include at least one of a destination identifier uniquely identifying a target destination, from amongst a plurality of target destinations, with which the user-defined tag content is to be linked and an action to be performed in association with the stage of the workflow 112. In one example, the processor 1002 may utilize NLP or LLM to parse the user-defined tag content and extract relevant data, such as the destination identifier and the action to be performed.

The instructions 1008 may further cause the processor 1002 to determine a correlation between the stage descriptor linked with each of the plurality of stages and the tag descriptor. For example, the processor 1002 may analyze the similarity or overlap between words, phrases, or concepts in the stage descriptor linked with each of the plurality of stages and the tag descriptor to determine a measure of correaltion.

The instructions 1008 may further cause the processor 1002 to compute a correlation score to determine the correlation between the tag descriptor and the stage descriptor linked with each of the plurality of stages. For example, the processor 1002 may use similarity metrics, such as cosine similarity, that may compare the words phrases, or concepts in the stage descriptor linked with each of the plurality of stages and the tag descriptor to quantify their similarity. The similarity score computed, for example, by cosine similarity, may be the correlation score.

The instructions 1008 may further cause the processor 1002 to compare the correlation score with a threshold correlation score to identify a stage, from amongst the plurality of correlated stages, having the stage descriptor correlating with the tag descriptor. For example, if the correlation score computed based on the similarity between the tag descriptor and a stage descriptor (associated with a stage from amongst the plurality of stages) is determined by the processor 1002 to be greater than the threshold correlation score, the processor 1002 may determine that the stage descriptor is correlating with the tag descriptor. The stage linked with that stage descriptor may then be determined as fit for linking the tag descriptor. Thus, the instructions 1008 may cause the processor 1002 to associate, based on the correlation, the user-defined tag content, corresponding to the tag descriptor, with the correlating stage from amongst the plurality of stages.

The instructions 1008 may further cause the processor 1002 to detect the initialization of the correlating stage. In one example, the processor 1002 may detect initialization based on communication received from the collaborative work platform 104. In one example, the collaborative work platform 104 may be a REACT-based platform, and upon initialization of any stage of the workflow 112, the processor 1002 may receive a communication indicating initialization of that stage. Thus, upon initialization of the correlating stage, the processor 1002 may receive communication from the collaborative work platform indicating the the correlating stage has been initialized.

The instructions 1008 may further cause the processor 1002 to generate, in response to initialization of the correlating stage, an alert generation signal for indicating the user-defined tag content associated with the correlating stage. In one example, the instructions 1008 may cause the processor 102 to cause rendering of at least one of a visual indicator and an audio indication to indicate the user-defined tag content. In one example, at least one of the visual indicator and the audio indication may be rendered on the collaborative work platform 104. The visual indicator may be, for example, a textual representation of the user-defined tag content and the audio indication may be a speech output representing the user-defined tag content.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A system comprising:
a processor to:
receive a tag creation signal upon occurrence of an interaction with an actionable component linked with a collaborative work platform, the collaborative work platform having a workflow defined therein, the workflow comprising a plurality of correlated stages, each having linked therewith a stage descriptor comprising:
a stage identifier uniquely identifying each stage of the workflow; and
a set of actions associated with each stage of the workflow;
wherein the tag creation signal is indicative of creation of a request to define a tag for being linked with one or more stages from amongst the plurality of correlated stages;
initiate, in response to reception of the tag creation signal, acquisition of a user-defined tag content for being associated with the tag;
trigger parsing of the user-defined tag content to derive a tag descriptor corresponding to the user-defined tag content, the tag descriptor comprising at least one of:
a destination identifier uniquely identifying a target destination, from amongst a plurality of target destinations, with which the user-defined tag content is to be linked; and
one or more actions to be performed in association with the one or more stages of the workflow;
determine a correlation between the tag descriptor derived from the user-defined tag content and the stage descriptor linked with each of the plurality of correlated stages;
identify, based on the correlation, one or more stages, from among the plurality of correlated stages, correlating with the tag descriptor;
associate the user-defined tag content, corresponding to the tag descriptor, with the identified one or more stages;
monitor initialization of the one or more identified stages; and
generate, in response to initialization of the one or more identified stages, an alert generation signal for indicating the user-defined tag content associated with the one or more identified stages.

2. The system of claim 1, wherein the processor is to cause rendering of a first Graphical User Interface (GUI) to acquire the user-defined tag content for being associated with the tag, wherein the first GUI comprises at least a content receiving area to receive the user-defined tag content.

3. The system of claim 1, wherein the processor is to cause, in response to generation of the alert generation signal, rendering of a visual indicator for indicating the user-defined tag content.

4. The system of claim 3, wherein the processor is to trigger rendering of a second GUI to render the visual indicator.

5. The system of claim 1, wherein the processor is to cause, in response to generation of the alert generation signal, generation of an audio indication for indicating the user-defined tag content.

6. The system of claim 5, wherein the processor is to trigger translation of the user-defined tag content into the audio indication.

7. The system of claim 1, wherein the actionable component is an interactive GUI component being rendered on an interface associated with the collaborative work platform.

8. The system of claim 1, wherein the processor is to:
determine an activation status of each of the plurality of correlated stages to ascertain initialization of the one or more identified stages; and
ascertain to generate the alert generation signal based on the determined activation status.

9. The system of claim 1, wherein the processor is to:
monitor status of a session between the target destination and the collaborative work platform, wherein the session is established upon logging in on the collaborative work platform, and wherein the status is to indicate whether the session is established; and
ascertain to generate the alert generation signal based on the status of the session.

10. The system of claim 1, the system further comprising a data repository communicably coupled with the processor, wherein the data repository is to store the user-defined tag content and the stage descriptor associated with each of the plurality of correlated stages.

11. The system of claim 1, wherein the processor is to:
compute a correlation score to quantify the correlation between the tag descriptor and the stage descriptor linked with each of the plurality of correlated stages; and
compare the correlation score with a threshold correlation score to identify the one or more stages correlating with the tag descriptor.

12. The system of claim 1, wherein the processor is to trigger a natural language processing engine for parsing the user-defined tag content to derive the tag descriptor corresponding to the user-defined tag content.

13. A method comprising:
generating a tag creation signal in response to receiving an actionable input in a collaborative work platform, wherein the tag creation signal is to initiate creation of a tag for being linked with a stage from amongst a plurality of stages of a workflow, and wherein each of the plurality of stages has a stage descriptor linked therewith, the stage descriptor comprising:
a stage identifier uniquely identifying each stage of the workflow; and
a set of actions associated with each stage of the workflow;
initiating, in response to generation of the tag creation signal, acquisition of a user-defined tag content for being associated with the tag;
analyzing the user-defined tag content to extract a tag descriptor corresponding to the user-defined tag content, the tag descriptor comprising at least one of:
a destination identifier uniquely identifying a target destination, from amongst a plurality of target destinations, with which the user-defined tag content is to be linked; and
an action to be performed in association with the stage of the workflow;
determining a correlation between the stage descriptor linked with each of the plurality of correlated stages and the tag descriptor;
associating, based on the correlation, the user-defined tag content, corresponding to the tag descriptor, with a stage, from amongst the plurality of stages, having the stage descriptor correlating with the tag descriptor; and
generating an alert generation signal upon initialization of the stage having the stage descriptor correlating with the tag descriptor, wherein generation of the alert generation signal is to cause an indication of the user-defined tag content associated with the stage.

14. The method of claim 13, the method further comprising:
computing a correlation score to determine the correlation between the stage descriptor linked with each of the plurality of stages and the tag descriptor; and
comparing the correlation score with a threshold correlation score to identify the stage having the stage descriptor correlating with the tag descriptor.

15. A non-transitory computer-readable medium comprising instructions being executable by a processing resource to:
generate a tag creation signal upon receiving an actionable input in a collaborative work platform, wherein generation of the tag creation signal is to initiate creation of a tag for being linked with a stage from amongst a plurality of stages of a workflow, and wherein each of the plurality of stages has a stage descriptor linked therewith, the stage descriptor comprising:
a stage identifier uniquely identifying each stage of the workflow; and
a set of actions associated with each stage of the workflow;
initiate, in response to generation of the tag creation signal, acquisition of a user-defined tag content for being associated with the tag;
parse the user-defined tag content to determine a tag descriptor corresponding to the user-defined tag content, the tag descriptor comprising at least one of:
a destination identifier uniquely identifying a target destination, from amongst a plurality of target destinations, with which the user-defined tag content is to be linked; and
an action to be performed in association with the stage of the workflow:
determine a correlation between the stage descriptor linked with each of the plurality of stages and the tag descriptor;
associate, based on the correlation, the user-defined tag content, corresponding to the tag descriptor, with a correlating stage from amongst the plurality of stages;
detecting initialization of the correlating stage; and
generating, in response to initialization of the correlating stage, an alert generation signal for indicating the user-defined tag content associated with the correlating stage.
